# EUROPEAN PATENT APPLICATION

(11) **EP 4 755 673 A1**
(43) Date of publication of application: **10.06.2026**
(21) Application number: 25220276.7
(22) Date of filing: 02.12.2025
(51) Int. Cl.: B60H 1/00, B60H 1/28

(54) **VEHICLE AIR CONDITIONING UNIT AND VEHICLE FRONT SECTION STRUCTURE**

(30) Priority: 06.12.2024 JP 2024214014
(71) Applicant: Toyota Jidosha Kabushiki Kaisha, Toyota-shi, Aichi-ken 471-8571 (JP)
(72) Inventor: SAEKI, Koji, TOYOTA-SHI, AICHI-KEN, 471-8571 (JP)
(74) Representative: Cabinet Beau de Loménie

(57) **Abstract**

Vehicle air conditioning unit including an air intake structural body (50) that is suitable to be disposed at a vehicle front side of a dash panel and includes a flow path (52) for supply of external air, and an energy absorption section (60) that is provided to at least one of a vehicle width direction side section or a vehicle height direction side section of the air intake structural body (50), wherein the energy absorption section (60) is suitable to be disposed spanning in a vehicle front-rear direction, and is formed from a metal material capable of plastic deformation.

## Description

### CROSS-REFERENCE TO RELATED APPLICATION

This application is based on and claims priority under 35 USC 119 from Japanese Patent Application No. 2024-214014 filed on December 6, 2024, to which the skilled person can refer when considering the present disclosure.

### BACKGROUND

### Technical Field

The present disclosure relates to a vehicle air conditioning unit and a vehicle front section structure.

### Related Art

Japanese Patent Application Laid-Open (JP-A) No. 2021-059290 discloses an attachment structure for a vehicle air conditioning unit attached to a dash panel in a state in which the air conditioning unit, for conditioning inside a vehicle cabin, has passed through an opening provided in the dash panel.

In the attachment structure and the like described in JP-A No. 2021-059290, the dash panel is pushed by members of the power unit chamber moving toward the vehicle rear during a frontal collision, and there is a concern that the dash panel might push equipment, such as a heating, ventilating, and air-conditioning (HVAC) system disposed inside the space, further inside and that such equipment might intrude into the vehicle cabin. There is accordingly a desire to raise the energy absorption efficiency in the power unit chamber.

### SUMMARY

In consideration of the above circumstances, the present disclosure is to provide a vehicle air conditioning unit and a vehicle front section structure that are capable of improving the energy absorption efficiency inside the power unit chamber.

A vehicle air conditioning unit according to a first aspect includes an air intake structural body that is disposed at a vehicle front side of a dash panel and includes a flow path for supply of external air, and an energy absorption section that is provided to at least one of a vehicle width direction side section or a vehicle height direction side section of the air intake structural body, the energy absorption section being disposed spanning in a vehicle front-rear direction, and formed from a metal material capable of plastic deformation.

In the vehicle air conditioning unit according to the first aspect, the energy absorption section plastically deforms to absorb energy during a crash when input with crash load from the vehicle front side, thereby enabling the energy absorption efficiency inside the power unit chamber to be improved.

A vehicle air conditioning unit according to a second aspect is the configuration described for the first aspect, wherein the energy absorption section has a square wave (or battlement) shaped profile or a concertina shaped profile formed along the vehicle front-rear direction.

In the vehicle air conditioning unit according to the second aspect, the air intake structural body may be collapsed in the vehicle front-rear direction due to the square wave (or battlement) shaped profile or the concertina shaped profile.

A vehicle air conditioning unit according to a third aspect is the configuration described for the first aspect, wherein the energy absorption section includes plural polygonal profiled hollow ribs arrayed along the vehicle front-rear direction.

In the vehicle air conditioning unit according to the third aspect, the air intake structural body may be collapsed by deforming the hollow ribs.

A vehicle air conditioning unit according to a fourth aspect is the configuration described for any one of the first aspect to the third aspect, wherein the air intake structural body includes a plate shaped filter section through which the external air passes, the filter section being disposed in an orientation having a plate thickness direction thereof aligned with the vehicle height direction.

In the vehicle air conditioning unit according to the fourth aspect, since the filter section is disposed in an orientation having a plate thickness direction aligned with the vehicle height direction, the filter section is deformed under input of crash load from the vehicle front side and is able to contribute to energy absorption.

A vehicle air conditioning unit according to a fifth aspect is the configuration described for any one of the first aspect to the fourth aspect, wherein the air intake structural body includes an air inlet that joins an air intake port of a cowl section to a blower unit.

In the vehicle air conditioning unit according to the fifth aspect, due to the air inlet being deformed under input of crash load from the vehicle front side and absorbing energy during a crash, the energy absorption efficiency inside the power unit chamber may be improved.

A vehicle front section structure according to a sixth aspect includes a dash panel provided so as to partition between a power unit chamber disposed at a vehicle front side and a vehicle cabin, and a vehicle air conditioning unit that includes an air intake structural body disposed at a vehicle front side of the dash panel and includes a flow path for supplying external air, and an energy absorption section provided to at least one side section from out of a vehicle width direction side section or a vehicle height direction side section of the air intake structural body, disposed spanning in a vehicle front-rear direction, and formed from a metal material capable of plastic deformation.

In the vehicle front section structure according to the sixth aspect, the energy absorption section plastically deforms when crash load has been input from the vehicle front side and absorbs energy during a crash, thereby enabling the energy absorption efficiency inside the power unit chamber to be improved.

A vehicle front section structure according to a seventh aspect is the configuration described for the sixth aspect, wherein the air intake structural body is attached to the dash panel.

In the vehicle front section structure according to the seventh aspect, during a vehicle frontal collision, the air intake structural body can absorb energy arising from being supported by the dash panel at the rear side, thereby enabling energy to be absorbed effectively inside the power unit chamber.

A vehicle front section structure according to an eighth aspect is the configuration described for the sixth aspect or the seventh aspect, further including at least one of a heat management unit or a drive unit disposed at a vehicle front-rear direction front side of the air intake structural body.

In the vehicle front section structure according to the eighth aspect, the heat management unit and the drive unit are configured so as to be comparatively hard to collapse, thereby enabling the air intake structural body to be collapsed by the heat management unit or the drive unit during a vehicle frontal collision.

A vehicle front section structure according to a ninth aspect is the configuration described for any one of the sixth aspect to the eighth aspect, wherein the dash panel is configured from a material having a higher hardness than the air intake structural body.

In the vehicle front section structure according to the ninth aspect, the air intake structural body may be more effectively collapsed.

As described above, the vehicle air conditioning unit and the vehicle front section structure according to the present disclosure are able to improve the energy absorption efficiency inside the power unit chamber.

### BRIEF DESCRIPTION OF THE DRAWINGS

Exemplary embodiments of the present disclosure will be described in detail based on the following figures, wherein:
Fig. 1 is a side view cross-section schematically illustrating an example of a vehicle front section structure according to an exemplary embodiment of the present disclosure;
Fig. 2 is a perspective view schematically illustrating an example of an air intake structural body of a vehicle air conditioning unit according to a first exemplary embodiment of the present disclosure;
Fig. 3 is a side view cross-section to explain operation and effects of the vehicle front section structure of Fig. 1;
Fig. 4 is a plan view cross-section schematically illustrating a modified example of the air intake structural body of Fig. 2; and
Fig. 5 is a side view cross-section schematically illustrating an example of an air intake structural body of a vehicle air conditioning unit according to a second exemplary embodiment of the present disclosure.

### DETAILED DESCRIPTION

Description follows regarding a vehicle front section structure according to an exemplary embodiment of the present disclosure, with reference to the appended drawings. Note that the same reference numerals will be appended in the present specification and drawings to configuration elements having essentially the same functional configuration, and duplicate explanation thereof will be omitted. Moreover, as appropriate in the drawings, arrow FR indicates a front side in a vehicle front-rear direction, and arrow UP indicates upward in a vehicle height direction. Arrow RH indicates a right side in a vehicle width direction. Hereinafter, unless explicitly stated otherwise, reference simply to front and rear, up and down, and left and right directions indicate front and rear in the vehicle front-rear direction, up and down in the vehicle height (vertical) direction, and left and right in the vehicle left-right direction (vehicle width direction).

### Vehicle Front Section Structure Configuration

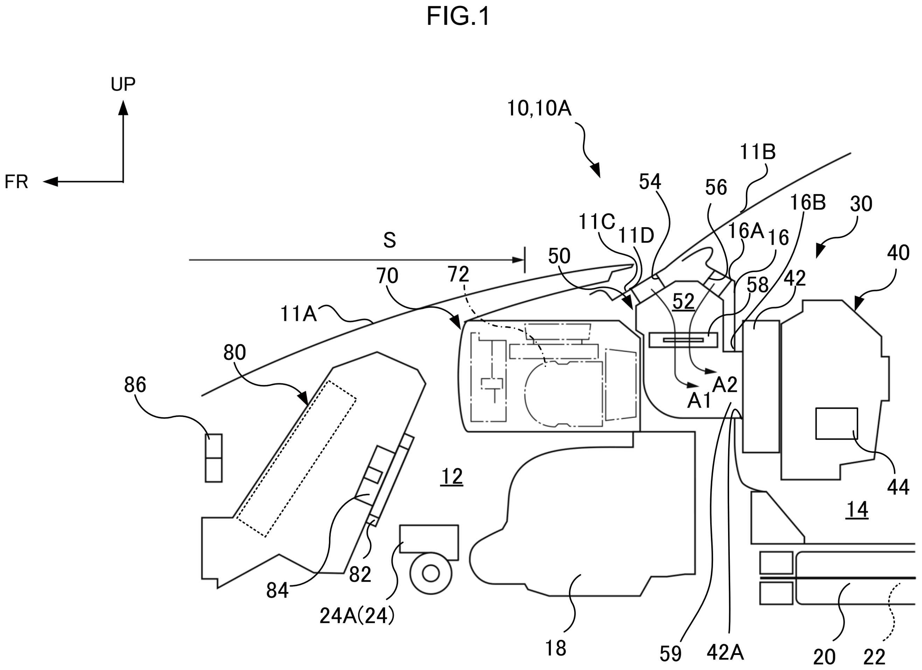

First, description follows regarding a configuration of a vehicle front section structure 10 serving as an example of a vehicle front section structure according to an exemplary embodiment of the present disclosure. Fig. 1 is a side view cross-section schematically illustrating an example of the vehicle front section structure 10.

Fig. 1 schematically illustrates the vehicle front section structure 10 indicating a structure of a front section of a vehicle. As illustrated in Fig. 1, in the vehicle front section structure 10, a dash panel 16 partitions between a power unit chamber 12, where motive power of the vehicle is disposed, and a vehicle cabin 14. Examples of vehicles in the present exemplary embodiment include vehicles that travel under motive power generated by a power unit including a drive motor or the like, such as a battery electric vehicle (BEV), a fuel cell electric vehicle (FCEV), a hybrid electric vehicle (HEV), or a plug-in hybrid electric vehicle (PHEV).

In the present exemplary embodiment, an electric axle 18 (hereafter called an e-axle 18) is installed as an example of a drive motor (i.e., a drive unit). The e-axle 18 is disposed inside the power unit chamber 12, and includes a non-illustrated motor main body and a motive power transmission mechanism. The motor main body is arranged at a vehicle lower side of the vehicle cabin 14, and more specifically at a lower side of a floor panel (omitted in the drawings), and is driven by output from a battery cell 22 housed inside a battery case 20. The output of the motor main body is transmitted through the motive power transmission mechanism to a drive shaft (omitted in the drawings). Namely, the output of the e-axle 18 is configured so as to be transmitted through the drive shaft to front wheels (omitted in the drawings).

The e-axle 18 is, for example, attached to a framework member of the vehicle through a suspension member 24. The suspension member 24 includes, for example, side members (omitted in the drawings) that each extend in the vehicle front-rear direction at the respective two vehicle width direction sides, and a front cross member 24A and a rear cross member (omitted in the drawings) that are arranged at the vehicle front-rear direction sides and span between the left and right side members. The suspension member 24 fixes the e-axle 18 using a mount attachment section (omitted in the drawings).

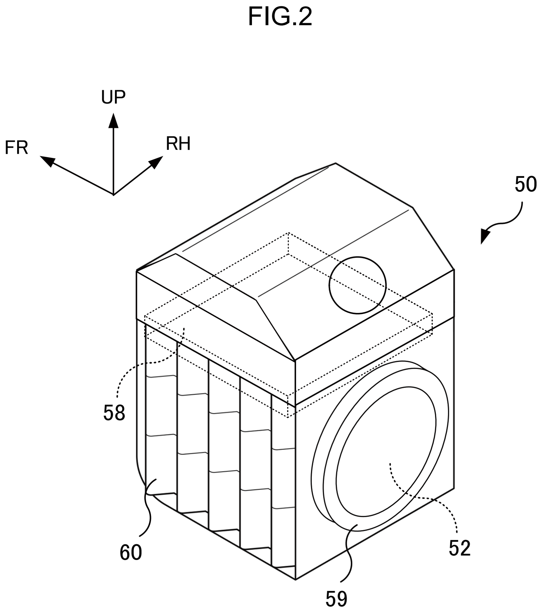

A vehicle air conditioning unit 30 is attached to a vehicle height direction central portion of the dash panel 16. In the present exemplary embodiment, for example, the vehicle air conditioning unit 30 includes a HVAC system 40, an air intake structural body 50, and an energy absorption section 60 (see Fig. 2).

The HVAC system 40 includes, for example, a heater core (omitted in the drawings) that generates warm air for use in heating, an evaporator (omitted in the drawings) that generates cold air for use in cooling, and a blower unit 42 that blows air into the vehicle cabin 14 and ventilates the inside of the vehicle cabin 14. In the present exemplary embodiment, for example, the HVAC system 40 includes an aircon unit 44 with an integrated heater core and evaporator, and the blower unit 42 containing an inbuilt air moving machine.

The HVAC system 40 includes a substantially circular infeed port 42A provided on a vehicle front end face of the blower unit 42 (end face on the dash panel 16 side thereof) for in-feeding air, with the infeed port 42A disposed so as to oppose the dash panel 16. The HVAC system 40 also includes a discharge port (omitted in the drawings) for discharging air with the discharge port, for example, opening toward the inside of the vehicle cabin 14. Air that has been regulated in temperature by the HVAC system 40 is discharged from the discharge port into the vehicle cabin 14.

The air intake structural body 50 is disposed at the vehicle front side of the dash panel 16, and is configured so as to be able to intake external air from outside the vehicle and from inside the vehicle cabin 14. The air intake structural body 50 includes a flow path 52 (see arrows A1, A2 of Fig. 1) for guiding the external air from outside the vehicle and from inside the vehicle cabin 14 toward the HVAC system 40. Namely, the interior of the air intake structural body 50 includes the flow path 52 for supplying external air. In the present exemplary embodiment, external air means air present at the outside of the vehicle air conditioning unit 30 including the air intake structural body 50.

As illustrated in Fig. 1, the air intake structural body 50 includes, for example, a first duct 54 that extends diagonally upward and forward at an upper end portion thereof, that is in communication with a first air intake port 11D provided to a cowl section 11C, described later, and that feeds external air into the flow path 52 provided inside the air intake structural body 50 (see arrow A1 of Fig. 1). The air intake structural body 50 also includes, for example, a second duct 56 that extends diagonally upward and rearward at an upper end portion thereof, that is in communication with a second air intake port 16A, described later, provided to the dash panel 16, and that feeds external air from inside the vehicle cabin 14 into the flow path 52 provided inside the air intake structural body 50 (see arrow A2 of Fig. 1). Note that the first duct 54 and the second duct 56 may be formed integrally to the air intake structural body 50, or may be formed as separate members therefrom.

In the present exemplary embodiment, as illustrated for example in Fig. 1, the vehicle front section structure 10 includes a hood section 11A arranged at an upper end of the vehicle front section, and a cowl section 11C that is provided in the vicinity of a boundary to a windshield glass 11B, and that is provided at a lower end side of the windshield glass 11B at a vehicle rear side of the hood section 11A. The cowl section 11C is, for example, configured from a resin material, and serves as a rain gutter to receive rainwater flowing downward from the windshield glass 11B such as during rainy weather.

The first air intake port 11D for feeding external air into the air intake structural body 50 is provided to the cowl section 11C, and the first air intake port 11D faces the vehicle outside. The first duct 54 described above is attached to the first air intake port 11D from the power unit chamber 12 side thereof, and external air from the first air intake port 11D is fed through the first duct 54 and into the flow path 52 at the inside of the air intake structural body 50 (see arrow A1 of Fig. 1).

The second air intake port 16A for feeding external air from inside the vehicle cabin 14 into the air intake structural body 50 is provided at a vehicle upper side of the dash panel 16, with the second air intake port 16A facing the inside of the vehicle cabin 14. The second duct 56 described above is attached to the second air intake port 16A from the power unit chamber 12 side thereof, and external air from inside the vehicle cabin 14 is fed from the second air intake port 16A through the second duct 56 and into the flow path 52 of the air intake structural body 50 (see arrow A2 of Fig. 1).

Moreover, the air intake structural body 50 is provided with a plate shaped filter section 58 that lets external air from outside the vehicle and from inside the vehicle cabin 14 pass through into the interior thereof. In other words, the filter section 58 is provided partway along the flow path 52 in the interior of the air intake structural body 50. The filter section 58 is configured, for example, by an air filter fixed at an inside of a plate frame made from resin, steel, or the like, and the air filter has a function to filter external air that has been fed into the flow path 52. In the present exemplary embodiment, the filter section 58 is, for example, disposed in an orientation in which the plate thickness direction is aligned with the vehicle height direction.

The air intake structural body 50 is also, for example, provided with a substantially circular connecting tube 59 at a vehicle rear end portion thereof that is at a downstream side of the flow paths A1, A2, and the connecting tube 59 is connected to the infeed port 42A of the blower unit 42 described above. Namely, the air intake structural body 50 functions as an air inlet to join the first air intake port 11D of the cowl section 11C and the blower unit 42 together. This means that the air intake structural body 50 is fed with the external air from the first air intake port 11D and the second air intake port 16A using the air moving machine (omitted in the drawings) of the blower unit 42, and external air is discharged from the air intake structural body 50 into the HVAC system 40.

In the present exemplary embodiment, for example, the connecting tube 59 is inserted through a connection hole 16B provided to the dash panel 16 and is connected to the infeed port 42A of the blower unit 42. The external periphery of the connecting tube 59 is attached to the dash panel 16 by, for example, a bracket (omitted in the drawings) and fastening members, or by adhesive or the like. In the present exemplary embodiment, for example, the dash panel 16 is configured from a harder material (i.e., a material having a higher hardness or rigidity) than the air intake structural body 50 and is, for example, formed from a resin, steel, or the like.

Note that in the present exemplary embodiment, the first duct 54 includes an air intake door (omitted in the drawings) that opens and closes the internal flow path, and the air intake door is configured so as to open when the HVAC system 40 has been set to feed in external air by an operation section (omitted in the drawings) or the like. In other words, the air intake door is configured so as to close when the HVAC system 40 is set to in-cabin circulation mode.

Fig. 2 is a perspective view schematically illustrating an example of the air intake structural body 50. Note that the first duct 54 and the second duct 56 are omitted from illustration in Fig. 2. The energy absorption sections 60 illustrated in Fig. 2 are provided at each of the two vehicle width direction side sections of the air intake structural body 50. The energy absorption sections 60 have, for example, a concertina shaped profile and are each disposed along the vehicle front-rear direction. The air intake structural body 50 is, for example, configured by a box-shaped member made from a metal material capable of plastic deformation such as steel. In the present exemplary embodiment, vehicle width direction side faces of this box-shaped member form the energy absorption sections 60, which have a concertina shaped profile. Namely, the energy absorption section 60 is formed from a metal material.

Note that concertina shaped profile is a profile of alternately repeating ridge folds and valley folds. In the present exemplary embodiment, each of the energy absorption sections 60 is configured such that the ridge folds and valley folds of the concertina shaped profile are folds extending along the vehicle height direction, and provided to the air intake structural body 50 such that the ridge folds and valley folds alternately repeat along the vehicle front-rear direction.

Note that although in the present exemplary embodiment the air intake structural body 50 and the energy absorption section 60 are formed from metal material, the present disclosure is not limited thereto and, for example, they may be formed from a resin. Note that, when the air intake structural body 50 and the energy absorption section 60 are formed from a resin, similarly to in the above exemplary embodiment, they are also preferably configured from a softer substance than the dash panel 16.

Returning to Fig. 1, a heat management unit 70 is disposed at a vehicle front side of the air intake structural body 50. The heat management unit 70 is modulized component that includes a compressor 72 and the like, and is a system that performs overall control so as to achieve an optimum temperature for all components, such as the e-axle 18, the battery cell 22, and the HVAC system 40. The heat management unit 70 is housed in a case that is comparatively hard to collapse (i.e., a case having a higher rigidity than the air intake structural body 50). In the present exemplary embodiment, the heat management unit 70, the air intake structural body 50, and the HVAC system 40 are arranged in a row in this sequence from the vehicle front side toward the vehicle rear side, as illustrated in Fig. 1.

Moreover, a radiator 80 is disposed at a vehicle front side of the e-axle 18, the heat management unit 70, and the like, and is disposed at an inclination such that a vehicle upper portion thereof is positioned further toward the vehicle rear side. A tubular shaped fan shroud 82, an electric fan 84, and the like are arranged at the vehicle rear side of the radiator 80 to guide the air fed in from the radiator 80 to the vehicle rear side. The radiator 80 is, for example, a structural body that is formed in a substantially rectangular frame shape when viewed along the vehicle front-rear direction, flattened in the vehicle front-rear direction, with coolant tubing (omitted in the drawings) provided, for example, meandering so as to extend from one side to the other and turn back from the other side to the one side plural times along the vehicle width direction. Multiple fans (omitted in the drawings) are attached to the coolant tubing, and external air that has been fed into the interior of the power unit chamber 12 through a front grill 86 during vehicle travel passes between the fans, and cools the coolant inside the coolant tubing. The coolant tubing circulates with internal flow paths of the e-axle 18 and the battery cell 22, and coolant that has been fed under pressure by a pump (omitted in the drawings) passes through the coolant tubing and circulates through the interior of the e-axle 18 and the battery cell 22 so as to perform heat exchange therewith. The e-axle 18 and the battery cell 22 are cooled thereby.

In the vehicle front section structure 10 configured as described above, for example, a crash stroke is set from a front end of the vehicle to the vicinity of the front end of the compressor 72 of the heat management unit 70, as illustrated by arrow S of Fig. 1.

### Operation and Effects of the First Exemplary Embodiment

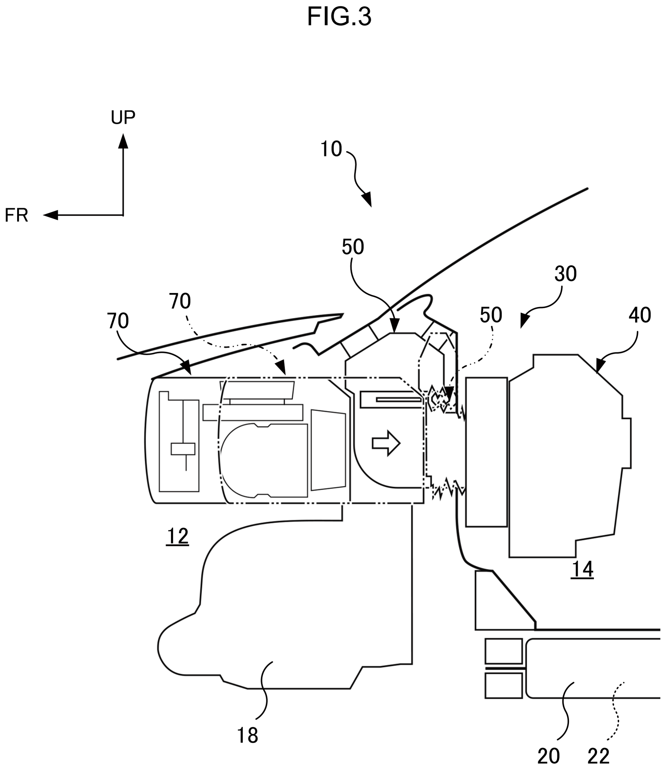

Next, description follows regarding the operation and effects of the first exemplary embodiment. Fig. 3 is a side view cross-section to explain the operation and effects of the vehicle front section structure 10 of the first exemplary embodiment.

In the vehicle front section structure 10 and the vehicle air conditioning unit 30 of the first exemplary embodiment, the crash stroke is set as illustrated in Fig. 1. Therefore, the heat management unit 70 is moved from the position indicated by the solid line in Fig. 3 to the position indicated by the double-dot broken line therein when crash load has been input from the vehicle front side. When this occurs, due to the heat management unit 70 being housed in a case that is comparatively hard to collapse, the heat management unit 70 does not collapse and, instead, presses the air intake structural body 50 toward the vehicle rear side. The vehicle air conditioning unit 30 of the first exemplary embodiment is provided with the energy absorption sections 60 having concertina shaped profiles formed along the vehicle front-rear direction provided at both vehicle width direction side sections of the air intake structural body 50, enabling the air intake structural body 50 to collapse in the vehicle front-rear direction due to the concertina shaped profiles. In the vehicle front section structure 10 and the vehicle air conditioning unit 30 of the first exemplary embodiment, the energy absorption sections 60 accordingly absorb energy during a crash, enabling the energy absorption efficiency to be improved inside the power unit chamber 12.

Moreover, in the vehicle front section structure 10 and the vehicle air conditioning unit 30 of the first exemplary embodiment, the air intake structural body 50 functions as an air inlet joining the first air intake port 11D of the cowl section 11C and the blower unit 42 together. This means that energy during a crash is absorbed by deformation of the air inlet, namely the air intake structural body 50, under input of crash load from the vehicle front side, thereby enabling the energy absorption efficiency inside the power unit chamber 12 to be improved.

Moreover, in the vehicle front section structure 10 of the first exemplary embodiment, since the air intake structural body 50 is attached to the dash panel 16, energy may be absorbed during a vehicle frontal collision based on support of the dash panel 16 at the rear side of the air intake structural body 50. This means that energy may be absorbed effectively inside the power unit chamber 12.

Moreover, in the vehicle front section structure 10 of the first exemplary embodiment, the heat management unit 70 is disposed at the vehicle front side of the air intake structural body 50, and since the heat management unit 70 is configured so as to be comparatively hard to collapse, the air intake structural body 50 can be collapsed by the heat management unit 70 during a vehicle frontal collision.

Moreover, in the vehicle front section structure 10 of the first exemplary embodiment, since the dash panel 16 is configured from a harder material than the air intake structural body 50, the air intake structural body 50 may be collapsed more effectively.

Moreover, in the vehicle front section structure 10 of the first exemplary embodiment, the filter section 58 is disposed in an orientation in which its plate thickness direction is aligned with the vehicle height direction. The filter section 58 would not usually have a rigidity sufficiently high to contribute to energy absorption. However, as described above, due to the filter section 58 being disposed at an orientation in which its plate thickness direction is aligned with the vehicle height direction, the filter section 58 deforms under input of crash load from the vehicle front side, enabling a contribution the energy absorption.

### Modified Example of First Exemplary Embodiment

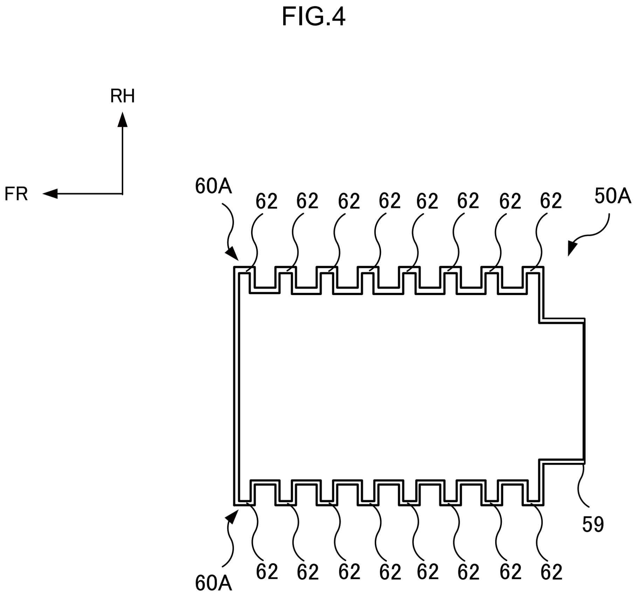

Although in the air intake structural body 50 of the first exemplary embodiment the energy absorption sections 60 have concertina shaped profiles, the present disclosure is not limited thereto. Fig. 4 is a plan view cross-section schematically illustrating a modified example of the air intake structural body 50 of Fig. 2. Note that Fig. 4 illustrates a cross-section taken along a center axis of a connecting tube 59.

As illustrated in Fig. 4, energy absorption sections 60A spanning in the vehicle front-rear direction are disposed at the two vehicle width direction side sections of an air intake structural body 50A of a modified example. The energy absorption sections 60A are each formed with a square wave (or a battlement) shaped profile along the vehicle front-rear direction. Specifically, the energy absorption sections 60A includes plural protrusions 62 that project toward the vehicle width direction outside, with the plural protrusions 62 arrayed at a specific spacing from each other along the vehicle front-rear direction. The plural protrusions 62 project out with substantially rectangular profiles when viewed from above, and are each formed in a substantially oblong shape having a length direction along the vehicle height direction in side view. Note that the profile of the protrusions 62 is not limited to being a substantially rectangular shape when viewed from above and may be modified as appropriate, and may be a profile such as a trapezoidal profile or a triangular profile when viewed from above.

Due to each of the energy absorption sections 60A being formed with a square wave shaped profile along the vehicle front-rear direction as in the above modified example, the air intake structural body 50A can be collapsed along the vehicle front-rear direction by utilizing the square wave shaped profile.

### Second Exemplary Embodiment

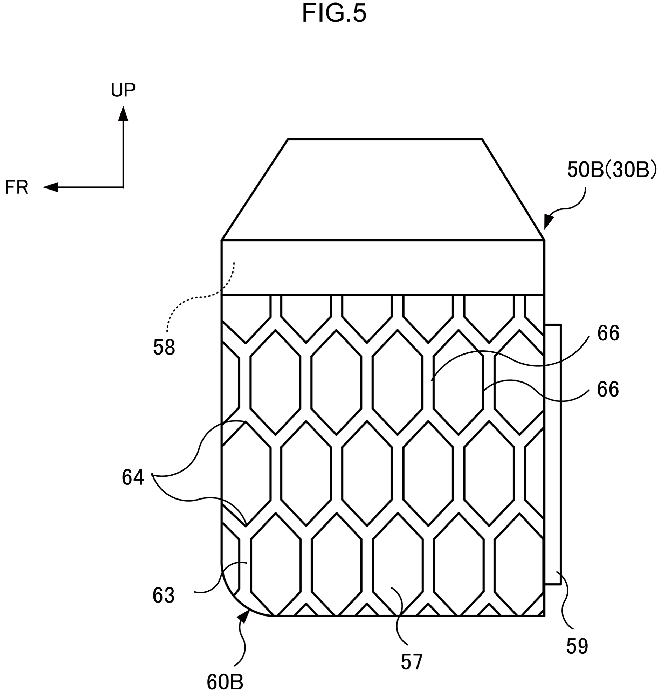

Next, description follows regarding a vehicle front section structure 10A according to a second exemplary embodiment of the present disclosure (see Fig. 1). Fig. 5 is a side view cross-section schematically illustrating an example of an air intake structural body 50B of a vehicle air conditioning unit 30B according to the second exemplary embodiment of the present disclosure. Note that the same reference numerals indicate configuration in the air intake structural body 50B of the second exemplary embodiment similar to that of the air intake structural body 50 of the first exemplary embodiment, and explanation thereof will be omitted, with detailed description only given for different portions thereto.

As illustrated in Fig. 5, the air intake structural body 50B of the second exemplary embodiment includes an energy absorption section 60B. The energy absorption section 60B includes plural hexagonal profile hollow ribs 63 arrayed along the vehicle front-rear direction. Specifically, the air intake structural body 50B is, for example, configured as a box-shaped member made from a metal material capable of plastic deformation, such as steel, and in the present exemplary embodiment the hollow ribs 63 are provided to a vehicle width direction side face 57 of the box-shaped member.

The plural hollow ribs 63 are formed such that their hollow hexagonal profiles project out from the vehicle width direction side face 57 toward the outside thereof, and the energy absorption sections 60B includes a honeycomb structure configured by the hollow ribs 63 disposed alongside each other without spaces therebetween. Namely, the plural hollow ribs 63 are configured as plural vehicle height direction rows arranged along the vehicle front-rear direction. The hollow ribs 63 are arranged such that a direction connecting opposite apexes 64 thereof is aligned with the vehicle height direction. In other words, the hollow ribs 63 are arranged such that straight lines configuring an opposing pair of sides 66 are aligned with the vehicle height direction.

### Operation and Effects of Second Exemplary Embodiment

Next, description follows regarding the operation and effects of the second exemplary embodiment.

In the vehicle air conditioning unit 30B of the vehicle front section structure 10A of the second exemplary embodiment, the energy absorption sections 60B each include the plural hexagonal profile hollow ribs 63, thereby enabling the air intake structural body 50B to be collapsed by utilizing deformation of the hollow ribs 63.

### Remarks

Note that although the energy absorption sections 60, 60A, 60B in the exemplary embodiment described above are made from a metal material capable of plastic deformation, such as steel, the present disclosure is not limited thereto. The energy absorption sections 60, 60A, 60B may, for example, be formed from a resin. In such cases too, due to energy being absorbed during a crash by the energy absorption sections 60, 60A, 60B undergoing plastic deformation under crash load input from the vehicle front side, the energy absorption efficiency inside the power unit chamber 12 can be raised.

Moreover, although the energy absorption sections 60, 60A, 60B are provided to the vehicle width direction side sections of the air intake structural bodies 50, 50A, 50B in the exemplary embodiment described above, the present disclosure is not limited thereto. The energy absorption sections 60, 60A, 60B may be provided to height direction side sections of the air intake structural bodies 50, 50A, 50B, and may be provided to both vehicle height direction and vehicle width direction side sections. Moreover, as long as the energy absorption sections 60, 60A, 60B are disposed spanning in the vehicle front-rear direction, they may be provided over the entirety of side sections, or may be provided over part thereof.

Moreover, although in the exemplary embodiment described above the air intake structural bodies 50, 50A, 50B are fixed to the dash panel 16, the present disclosure is not limited thereto, and may be configured not fixed to the dash panel 16. In such cases, for example, the blower unit 42 to which the air intake structural bodies 50, 50A, 50B are connected may be fixed to the dash panel 16.

Moreover, although the heat management unit 70 is arranged at the vehicle front-rear direction front side of the air intake structural bodies 50, 50A, 50B in the exemplary embodiment described above, the present disclosure is not limited thereto. For example, a drive unit such as an e-axle 18 or the like may be arranged at the vehicle front-rear direction front side of the air intake structural bodies 50, 50A, 50B, and the heat management unit 70 and the drive unit such as the e-axle 18 may be arranged alongside each other in the height direction. Since the heat management unit 70 and the drive unit such as the e-axle 18 are configured so as to be comparatively hard to collapse, the air intake structural body may be collapsed by the heat management unit 70 and the drive unit such as the e-axle 18 during a vehicle frontal collision.

Moreover, although the energy absorption sections 60B each include the hexagonal profile hollow ribs 63 in the second exemplary embodiment, hollow ribs of the present disclosure are not limited to having a hexagonal profile, and may have another polygonal profile such as an octagonal profile or the like.

Moreover, the configuration of the present disclosure is not limited to the exemplary embodiments described above, and may be changed to an appropriate configuration as long as the issues to be addressed are addressed thereby.

## Claims

1. A vehicle air conditioning unit (40) comprising:
an air intake structural body (50,50B) that is disposed at a vehicle front side of a dash panel and includes a flow path for supply of external air; and
an energy absorption section (60,60B) that is provided to at least one of a vehicle width direction side section or a vehicle height direction side section of the air intake structural body, the energy absorption section being disposed spanning in a vehicle front-rear direction, and formed from a metal material capable of plastic deformation.

2. The vehicle air conditioning unit of claim 1, wherein the energy absorption section (60) has a square wave shaped profile or a concertina shaped profile formed along the vehicle front-rear direction.

3. The vehicle air conditioning unit of claim 1, wherein the energy absorption section (60B) includes a plurality of polygonal profiled hollow ribs (63) arrayed along the vehicle front-rear direction.

4. The vehicle air conditioning unit of any one of claims 1 to 3, wherein the air intake structural body (60,60B) includes a plate shaped filter section (58) through which the external air passes, the filter section being disposed in an orientation having a plate thickness direction thereof aligned with the vehicle height direction.

5. The vehicle air conditioning unit of any one of claims 1 to 4, wherein the air intake structural body (60,60B) includes an air inlet (50) that joins an air intake port (11D) of a cowl section (11C) to a blower unit (42).

6. A vehicle front section structure comprising:
a dash panel (16) provided so as to partition between a power unit chamber (12) disposed at a vehicle front side and a vehicle cabin (14); and
a vehicle air conditioning unit (40) according to any one of claims 1 to 5.

7. The vehicle front section structure of claim 6, wherein the air intake structural body (50) is attached to the dash panel (16).

8. The vehicle front section structure of claim 6 or 7, further comprising at least one of a heat management unit (70) or a drive unit (18) disposed at a vehicle front-rear direction front side of the air intake structural body (50,50B).

9. The vehicle front section structure of any one of claims 6 to 8, wherein the dash panel (16) is configured from a material having a higher hardness than the air intake structural body (50,50B).
